# FASCICULE DE BREVET EUROPEEN

(11) **EP 3 363 720 B1**
(45) Date de publication et mention de la délivrance du brevet: **30.10.2019**
(21) Numéro de dépôt: 18156566.4
(22) Date de dépôt: 13.02.2018
(51) Int. Cl.: B62D 65/02, B62D 65/06

(54) **DISPOSITIF D'ARTICULATION TEMPORAIRE D'UNE PORTIÈRE DE VÉHICULE**
TEMPORÄRE GELENKVORRICHTUNG EINER FAHRZEUGTÜR
TEMPORARY HINGE DEVICE OF A VEHICLE DOOR

(30) Priorité: 17.02.2017 FR 1751313
(43) Date de publication de la demande: 22.08.2018
(73) Titulaire: COUTIER INDUSTRIE, 57970 Basse Ham (FR)
(72) Inventeur: COUTIER, Charles, 57970 BASSE HAM (FR); PELSER, Christian, 57970 BASSE HAM (FR); COUTIER, Virginie, 57970 BASSE HAM (FR)
(74) Mandataire: Lavialle, Bruno François Stéphane

(56) Documents cités:
- WO-A1-2010/049606
- DE-A1- 10 351 836
- DE-A1-102005 055 678
- US-A- 6 122 819

## Description

La présente invention concerne un dispositif destiné à associer provisoirement une porte de véhicule à la caisse de celui-ci notamment sur une ligne d'assemblage et de traitement de caisses de véhicules. La porte est au final une porte coulissante. Le dispositif est également appelé écarteur ou fausse-charnière.

Afin de pouvoir correctement traiter par exemple dans un bain de cataphorèse ou de revêtir par peinture une caisse de véhicule et ses portes et d'équiper le vantail et la caisse de divers accessoires et mastics, il convient de les associer au moyen d'un dispositif de liaison qui permet un mouvement de pivotement de la porte autour d'un axe d'articulation sensiblement vertical, pour pouvoir accéder soit à l'intérieur de la caisse par l'ouverture de la porte, soit à la face interne de cette porte.

La position relative de la caisse et de la porte doit être correctement assurée afin que cette dernière soit éloignée de la caisse ou située à proximité de l'ouverture à obturer. La précision de ces positions est requise notamment pour des questions de distance à conserver entre la surface à peindre et le pistolet de peinture et également pour maîtriser les effets "d'ombre" induits par le décalage des surfaces peintes simultanément au regard de la direction de projection de la peinture.

### ARRIERE PLAN DE L'INVENTION

Les dispositifs ou bâtis actuels sont formés par deux cadres articulés l'un à l'autre au moyen de deux bielles ou leviers intermédiaires qui forment avec les deux cadres, vus de dessus, un quadrilatère articulé.

L'un des cadres possède des moyens pour sa fixation à la caisse du véhicule au niveau de l'ouverture de portière. L'autre cadre possède des moyens pour supporter la porte elle-même. Dans certaines applications ces moyens de support comportent un troisième cadre articulé au second qui lui supporte la porte.

Ces structures de bâti de montage sont réalisées le plus souvent par des membrures mécano-soudées. Ainsi, on a proposé - voir FR 2 854 862 - un bâti de montage pour porte de véhicule comprenant un premier cadre avec des moyens pour sa fixation réglable sur une caisse de véhicule au voisinage de l'ouverture de porte, un second cadre avec des moyens pour le support sur ce second cadre de la porte du véhicule, des bras de liaison du premier au second cadre articulés sur le premier et sur le second cadre pour former avec ces derniers un quadrilatère déformable. Dans ce cas de figure, les articulations entre les bras et les cadres sont des articulations sphériques.

Cette disposition est tout à fait satisfaisante en production d'autant qu'elle fait l'objet d'un perfectionnement décrit dans FR 2 937 611 qui permet de calibrer correctement chaque bâti en quelques minutes, pour que le panneau de porte soit correctement placé par rapport à la caisse principalement dans le cas où le panneau est rabattu au voisinage de la porte. Un autre dispositif de montage est connu du document WO2010049606.

Il est apparu que, dans certains cas, ces dispositifs antérieurs sont difficiles à manœuvrer parce que de structure complexe, lourde et encombrante. En outre, ces dispositifs ne se prêtent pas aisément à la manipulation de la porte par des robots du fait de leurs poids.

La demande des constructeurs réside quelques fois dans des moyens plus compatibles avec une intégration de plus en plus importante des automates dans les chaînes de montage ou d'assemblage.

C'est dans cette optique que la réponse à cette exigence est revenue à un dispositif du genre fausse-charnière, c'est-à-dire à l'emploi de sortes de paumelles fixées, par paire, directement ou indirectement à la caisse et souvent directement à la portière, éliminant de ce fait la mise en œuvre de bâtis lourds et malaisés à manier et constituant des dispositifs meilleur marché. Cette simplification est réalisée cependant au détriment de la qualité des tâches accomplies.

### OBJET DE L'INVENTION

L'invention a notamment pour objectif de concilier au mieux ces exigences contradictoires que sont la garantie d'une qualité acceptable des opérations et la réduction des coûts.

### BREVE DESCRIPTION DE L'INVENTION

A cet effet l'invention a donc pour objet un dispositif de montage temporaire d'une portière sur une caisse de véhicule comprenant:
- un premier support solidaire de la caisse du véhicule au voisinage de l'ouverture de porte comportant des moyens qui définissent un axe d'articulation,
- un second support fixé à portière du véhicule qui porte des moyens d'articulation complémentaires de ceux du premier support pour être reçus par ces derniers et permettre à la portière d'être manœuvrée en rotation autour de cet axe d'articulation,
caractérisé en ce que le second support est fixé sur la face intérieure, y compris le chant avant, de la portière et en ce que l'axe d'articulation est situé à l'intérieur de la caisse et au-delà d'un bord de la portière du côté duquel est fixé le second support.

On notera que la portière concernée est principalement une portière qui, une fois le véhicule achevé, sera une portière coulissante montée sur la caisse d'un véhicule utilitaire. Cette portière sera de préférence, mais de manière non limitative, une portion coulissante arrière.

Cette caractéristique de l'invention permet un mouvement de la portière libre de tout contact de celle-ci d'avec la caisse au cours du pivotement tout en autorisant que cette portière puisse être maintenue au plus près de la caisse quand elle est rabattue sur cette dernière pour notamment diminuer au mieux les effets d'ombre lors de la peinture.

Dans une première variante de réalisation, le second support est directement fixé sur la face interne de la portière.

Dans une deuxième variante de réalisation, le second support comporte un bras de liaison qui coopère par articulation avec le premier support autour de l'axe susdit et qui reçoit par enfichage des moyens correspondant solidaires de la portière et en saillie de sa face interne.

Ces moyens d'enfichage portés par la portière définissent un axe d'articulation de cette dernière sur le bras de liaison parallèle à l'axe d'articulation.

Dans ce cas, le dispositif comporte un verrou entre la portière et le bras de liaison pour inhiber ou libérer leur rotation relative.

Comme rappelé ci-dessus, le véhicule concerné est principalement un véhicule utilitaire. Pour permettre un chargement ou un déchargement latéral d'une charge, notamment d'une charge allongée, les constructeurs suppriment le pied de porte qui est une partie latérale verticale de la caisse encombrant cet accès latéral.

Ainsi, dans le cas d'une caisse sans pied de porte, le premier support est un mât logé dans la caisse du véhicule.

Dans le cas d'un véhicule avec un pied de porte, le premier support susdit peut incorporer le pied de porte.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels:
- la figure 1 illustre les moyens de base de l'invention par le schéma d'une variante de réalisation de celle-ci destinée à une caisse de véhicule sans pied de porte.

Les figures suivantes sont toutes des dessins schématiques en vue de dessus illustrant les diverses variantes et caractéristiques de l'invention. C'est ainsi que :
- les figures 2a et 2b sont des schémas vus de dessus respectivement de la figure 1 et d'une variante de réalisation dans laquelle la liaison de la portière à la fausse-charnière est réalisée par le chant de la portière,
- la figure 3 est un schéma d'une variante de réalisation de l'invention,
- la figure 4 illustre une variante de réalisation de la figure 2,
- la figure 5 est l'illustration d'une autre variante de ces figures 1, 2 et 4.

### DESCRIPTION DETAILLEE DE L'INVENTION

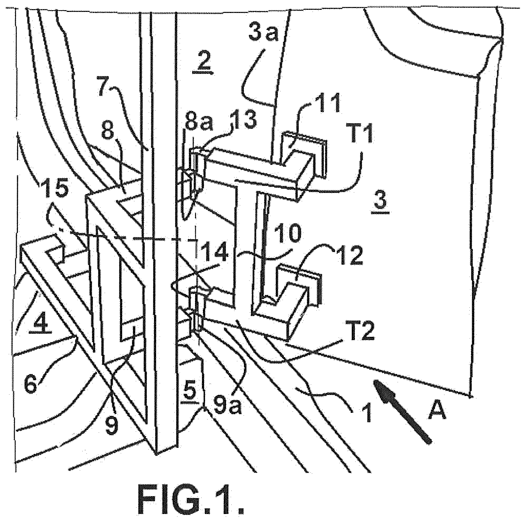

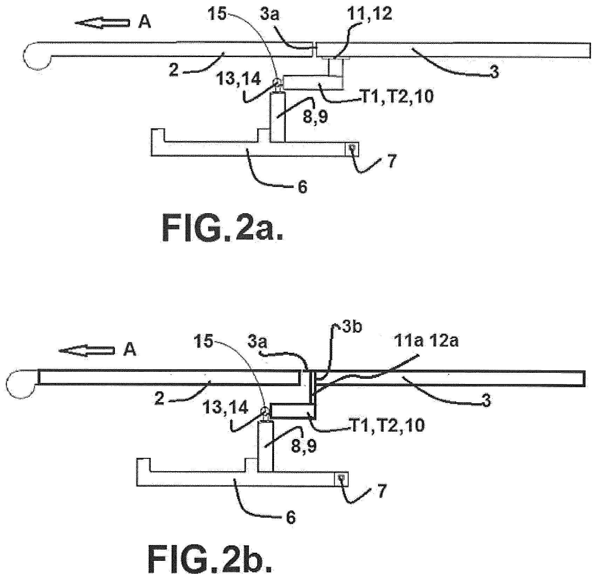

Aux figures 1 et 2a, on a représenté partiellement une caisse 1 de véhicule automobile à laquelle sont rapportées ici deux portières avant 2 et arrière 3. La portière avant 2 est pivotante et la portière arrière 3 est une portière coulissante mais qui, en cours de fabrication du véhicule, est attachée à la caisse par un dispositif dont le genre est connu et que l'on appelle fausse-charnière.

Il s'agit dans le cas de cette figure d'une caisse sans pied de porte, c'est-à-dire sans montant vertical entre la portière avant et la portière arrière.

Le dispositif de fausse-charnière comprend, dans cet exemple, fixé à deux traverses 4 et 5 de base de la caisse, un premier support comportant une semelle inférieure 6 et un montant vertical 7, ce dernier étant attaché à une partie supérieure de la caisse. Perpendiculairement au plan formé par cette semelle et ce montant, le support 6,7 comporte également deux potences 8 et 9 dont l'extrémité libre de chacune est équipée d'un moyen d'articulation (charnon, sphère ou autre) 8a, 9a, en attente de recevoir un moyen complémentaire attaché à la portière 3. Ces moyens d'articulation définissent un axe d'articulation 15 sensiblement vertical.

Il comporte également un second support 10, ici en forme de I, dont les traverses T1 et T2 sont équipées de platines 11 et 12 pour sa fixation sur la face interne de la portière 3. Ce support comporte aussi à l'autre des extrémités libres de chaque traverse inférieure T1 et supérieure T2, des moyens d'articulations 13 et 14 qui peuvent coopérer avec les moyens 8a et 9a précédemment décrits pour articuler cette portière, normalement coulissante, sur la caisse du véhicule.

A la figure 2b, la liaison du second support 10 à la portière 3 est réalisée sur le chant 3b de cette portière par des platines 11a, 12a appropriées.

La portière 3 est ainsi articulée sur la caisse 1 autour de l'axe 15 qui est selon l'invention, situé à l'intérieur de la caisse et au-delà du bord 3a de la portière 3 du côté duquel est fixé le second support 10.

Dans le mode de réalisation particulier illustré, il se trouve que le bord 3a est le bord avant de la portière 3, l'axe d'articulation étant situé en avant dudit bord avant 3a selon le sens A d'avancement du véhicule.

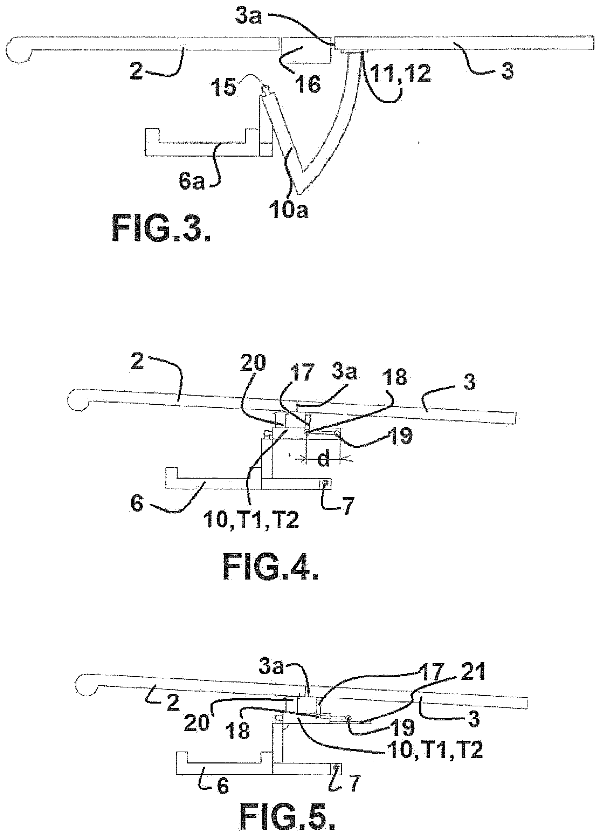

A la figure 3, la caisse du véhicule possède un pied de porte 16. Pour respecter la caractéristique de l'invention, à savoir la position relative de l'axe 15 par rapport au bord avant 3a de la portière 3, le second support 10a affecte une forme particulière, en ce qui concerne ses traverses T1 et T2 qui portent les platines 11 et 12. Cette forme cintrée permet le contournement du pied 16 lors de l'ouverture de la portière. Par ailleurs on notera que le premier support 6a est dépourvu de montant vertical.

Compte tenu qu'il faille au support 10, 10a une certaine rigidité pour la manipulation sans déformation de la portière, surtout lorsqu'elle est en grand porte-à-faux à l'extérieur de la caisse, ce support possède une certaine masse qui peut handicaper la manipulation de la portière qui en est équipée par un moyen robotisé lors de ses mouvements par rapport à la caisse.

C'est pourquoi, comme illustré à la figure 4, on a prévu de rapporter la portière sur son support 10, aux lieu et place des platines 11 et 12, au moyen de deux potences telle que celle 17 qui possèdent, pour chacune d'elles, des pions d'enfichage 18 et 19 de ces potences dans les traverses du support 10 pourvues à cet effet d'orifices de réception de ces pions. Ces traverses T1, T2 sont alors prolongées (voir la dimension « d » sur la figure) pour recevoir ces pions. On peut ainsi équiper la caisse du véhicule avec les premier et deuxième supports déjà assemblés et y rapporter la portière par simple enfichage sur le deuxième support déjà porté par le premier. De la même manière, on peut séparer la portière des supports restés ensemble sur la caisse.

On notera sur cette figure que le deuxième support 10 est équipé d'une butée d'appui 20 pour la portière avant du véhicule. Cette butée 20 a notamment pour fonction d'assurer une bonne position relative (« flush ») des portières latérales du véhicule quand elles sont toutes les deux rabattues contre la caisse.

A la figure 5, le dispositif représenté est celui de la figure 4 dans lequel les traverses T1 et T2 sont plus courtes de sorte que la fiche 19 est au-delà du support 10. Ainsi la portière peut-elle tourner par rapport au support 10 autour des enfichages haut et bas 18. On a représenté schématiquement un organe amovible 21 qui sert à immobiliser temporairement la fiche 19 par rapport au support 10 de manière à inhiber la rotation de la portière autour de la fiche 18. Lorsque cet organe 21 libère la fiche 19, la portière peut alors être rabattue, par exemple, autour des fiches 18 en direction de la caisse, alors que le support 10 a été légèrement pivoté, pour placer cette portière parallèlement à la caisse et légèrement écartée de celle-ci, ce qui peut être utile pour certaines opérations de traitement de la caisse.

Bien entendu le dispositif selon l'invention comporte un certain nombre de butées de fin de course non représentées pour notamment limiter le pivotement vers l'extérieur de la portière et aussi limiter les amplitudes de pivotement de celle-ci par rapport au support 10.

Le support 10 décrit au moins dans les réalisations des figures 1 à 3, est formé d'une seule pièce comportant les traverses T1 et T2. Ce n'est pas sortir du cadre de l'invention que de prévoir deux traverses indépendantes fixées par platines sur la face interne ou le chant de la portière 3 et dont les extrémités libres sont articulées sur le premier support 6, 7 en 8a et 9a.

De même ce n'est pas sortir du cadre de l'invention que de prévoir une inversion des portières 2 et 3 sur la caisse 1. La portière arrière sera ainsi pivotante et la portière avant sera une portière coulissante mais qui, en cours de fabrication du véhicule, sera montée pivotante sur la caisse 1. La portière avant sera alors articulée sur la caisse 1 autour de l'axe 15 situé à l'intérieur de la caisse et en arrière du bord arrière de la portière avant selon le sens d'avancement du véhicule.

De même ce n'est pas sortir du cadre de l'invention que de prévoir une seule portière montée sur la caisse 1. L'axe d'articulation de la portière sera alors situé à l'intérieur de la caisse et au-delà du bord de la portière du côté duquel est fixé le second support (soit en arrière du bord arrière ou en avant du bord avant selon le sens A d'avancement du véhicule).

## Revendications

1. Dispositif de montage temporaire d'une portière (3) sur une caisse (1) de véhicule comprenant:
- un premier support (6,7) solidaire de la caisse du véhicule au voisinage de l'ouverture de porte, comportant des moyens (8a,9a) qui définissent un axe d'articulation (15),
- un second support (10) fixé à la portière (3) du véhicule qui porte des moyens (13,14) d'articulation complémentaires de ceux du premier support (6) pour être reçus par ces derniers et permettre à la portière (3) d'être manœuvrée en rotation autour de cet axe (15) d'articulation,
**caractérisé en ce que** le second support (10) est fixé sur la face intérieure de la portière (3) y compris le chant (3b) de cette dernière, et **en ce que** l'axe d'articulation (15) est situé à l'intérieur de la caisse et au-delà d'un bord (3a) de la portière du côté duquel est fixé le second support.

2. Dispositif selon la revendication 1, **caractérisé en ce que** le second support (10) est directement fixé (11,12) sur la face interne de la portière (3).

3. Dispositif selon la revendication 1, **caractérisé en ce que** le second support (10) comporte des bras (T1,T2) de liaison qui coopère par articulation (13,14) avec le premier support (6) autour de l'axe (15) susdit et qui reçoivent par enfichage des moyens (18,19) solidaires de la portière (3) et en saillie de sa face interne.

4. Dispositif selon la revendication 3, **caractérisé en ce que** les moyens d'enfichage (18,19) portés par la portière définissent un axe d'articulation (18) de cette dernière sur les bras de liaison (T1,T2) du support (10) parallèle à l'axe d'articulation (15).

5. Dispositif selon la revendication 4, **caractérisé en ce qu'**il comporte un verrou (21) entre la portière (3) et les bras de liaison (T1,T2) pour inhiber ou libérer leur rotation relative.

6. Dispositif selon la revendication 1, **caractérisé en ce que** le bord (3a) est le bord avant de la portière (3) dans un sens (A) d'avancement du véhicule, l'axe d'articulation (15) étant ainsi situé en avant dudit bord avant dans un sens (A) d'avancement du véhicule.

7. Dispositif de montage temporaire d'une portière (3) sur une caisse (1) de véhicule sans pied de porte selon la revendication 1, **caractérisé en ce que** le premier support comporte un montant vertical (7) logé dans la caisse du véhicule.

8. Dispositif de montage temporaire d'une portière (3) sur une caisse (1) de véhicule avec pied de porte (16) selon la revendication 1, **caractérisé en ce que** le deuxième support (10a) comporte des traverses qui contournent le pied de porte (16).

## Patentansprüche

1. Vorrichtung zur temporären Montage einer Tür (3) an einer Fahrzeugkarosserie (1), umfassend:
- einen ersten Träger (6, 7), der fest mit der Karosserie des Fahrzeugs in der Nähe der Öffnung der Tür verbunden ist und Mittel (8a, 9a) umfasst, die eine Gelenkverbindungsachse (15) definieren,
- einen zweiten Träger (10), der an der Tür (3) des Fahrzeugs fixiert ist und Gelenkverbindungsmittel (13, 14) trägt, die zu denen des ersten Trägers (6) komplementär sind, um von diesen letztgenannten aufgenommen zu werden und der Tür (3) zu ermöglichen, in Drehung um diese Gelenkverbindungsachse (15) bewegt zu werden,
**dadurch gekennzeichnet, dass** der zweite Träger (10) an der Innenseite der Tür (3) einschließlich der Schmalseite (3b) dieser letztgenannten fixiert ist und dass sich die Gelenkverbindungsachse (15) im Inneren der Karosserie und jenseits eines Randes (3a) der Tür befindet, auf dessen Seite der zweite Träger befestigt ist.

2. Vorrichtung nach Anspruch 1, **dadurch gekennzeichnet, dass** der zweite Träger (10) direkt an der Innenseite der Tür (3) befestigt ist (11, 12).

3. Vorrichtung nach Anspruch 1, **dadurch gekennzeichnet, dass** der zweite Träger (10) Verbindungsarme (T1, T2) umfasst, die durch eine Gelenkverbindung (13, 14) mit dem ersten Träger (6) um die oben genannte Achse (15) zusammenwirken und die durch Einstecken Mittel (18, 19) aufnehmen, die fest mit der Tür (3) verbunden sind und von deren Innenseite vorstehen.

4. Vorrichtung nach Anspruch 3, **dadurch gekennzeichnet, dass** die Steckmittel (18, 19), die von der Tür getragen werden, eine Gelenkverbindungsachse (18) zur Gelenkverbindung dieser letztgenannten an den Verbindungsarmen (T1, T2) des Trägers (10) parallel zur Gelenkverbindungsachse (15) definieren.

5. Vorrichtung nach Anspruch 4, **dadurch gekennzeichnet, dass** sie einen Riegel (21) zwischen der Tür (3) und den Verbindungsarmen (T1, T2) umfasst, um deren relative Drehung zu verhindern oder freizugeben.

6. Vorrichtung nach Anspruch 1, **dadurch gekennzeichnet, dass** der Rand (3a) der Vorderrand der Tür (3) in Vorwärtsbewegungsrichtung (A) des Fahrzeugs ist, wobei sich die Gelenkverbindungsachse (15) folglich vor dem genannten Vorderrand in Vorwärtsbewegungsrichtung (A) des Fahrzeugs befindet.

7. Vorrichtung zur temporären Montage einer Tür (3) an einer Fahrzeugkarosserie (1) ohne Türfuß nach Anspruch 1, **dadurch gekennzeichnet, dass** der erste Träger eine vertikale Strebe (7) umfasst, die in der Karosserie des Fahrzeugs untergebracht ist.

8. Vorrichtung zur temporären Montage einer Tür (3) an einer Fahrzeugkarosserie (1) mit einem Türfuß (16) nach Anspruch 1, **dadurch gekennzeichnet, dass** der zweite Träger (10a) Querstreben umfasst, die um den Türfuß (16) herumführen.

## Claims

1. Device for temporarily mounting a door (3) on a vehicle body (1), comprising:
- a first support (6, 7) attached to the vehicle body in the vicinity of the door opening, including means (8a, 9a) which define a hinge axis (15),
- a second support (10) fixed to the door (3) of the vehicle which carries articulation means (13, 14) complementary to those of the first support (6) to be received by the latter and allow the door (3) to be rotated about this hinge axis (15),
**characterized in that** the second support (10) is fixed on the inner face of the door (3) including the edge (3b) thereof, and **in that** the hinge axis (15) is located inside the body and beyond an edge (3a) of the door on the side to which is fixed the second support.

2. Device according to claim 1, **characterized in that** the second support (10) is directly fixed (11, 12) to the inner face of the door (3).

3. Device according to claim 1, **characterized in that** the second support (10) includes connecting arms (T1, T2) which cooperate with the first support (6) by articulation (13, 14) about the aforesaid axis (15) and into which plug means (18, 19) attached to the door (3) and projecting from its inner face.

4. Device according to claim 3, **characterized in that** the plugging means (18, 19) carried by the door define a hinge axis (18) of the latter on the connecting arms (T1, T2) of the support (10) parallel to the hinge axis (15).

5. Device according to claim 4, **characterized in that** it includes a latch (21) between the door (3) and the connecting arms (T1, T2) to inhibit or release their relative rotation.

6. Device according to claim 1, **characterized in that** the edge (3a) is the front edge of the door (3) in a direction (A) of forward movement of the vehicle, the hinge axis (15) thus being located in front of said front edge in a direction (A) of forward movement of the vehicle.

7. Device according to claim 1 for temporarily mounting a door (3) on a vehicle body (1) without a door pillar, **characterized in that** the first support includes a vertical upright (7) housed in the body of the vehicle.

8. Device according to claim 1 for temporarily mounting a door (3) on a vehicle body (1) with a door pillar (16), **characterized in that** the second support (10a) includes crossmembers which bypass the door pillar (16).
